# EUROPEAN PATENT SPECIFICATION

(11) **EP 1 519 609 B1**
(45) Date of publication and mention of the grant of the patent: **22.04.2009**
(21) Application number: 04021158.3
(22) Date of filing: 06.09.2004
(51) Int. Cl.: H04W 12/12

(54) **Method of preventing clone call of clone terminal**
Verfahren zur Verhinderung eines geklonten Anrufs von einem geklonten Endgerät
Procédé pour empêcher un appel cloné d'un terminal cloné

(30) Priority: 27.09.2003 KR 2003067171
(43) Date of publication of application: 30.03.2005
(73) Proprietor: LG - Nortel Co., Ltd., 679, Yeoksam-dong Seoul (KR)
(72) Inventor: Lee, Sang Ho, Anyang-si Gyeonggi-do (KR)
(74) Representative: TER MEER - STEINMEISTER & PARTNER GbR

(56) References cited:
- EP-A- 0 163 358
- EP-A- 0 918 444
- US-A- 5 467 382
- US-A- 5 890 075
- US-A- 5 918 173
- US-A- 5 978 669
- US-A- 6 157 825
- US-A1- 2001 044 295
- US-A1- 2002 072 349

## Description

### BACKGROUND OF THE INVENTION

### Field of the Invention

The present invention relates to a method of preventing a clone call of a clone terminal, and more particularly, to a method of preventing a clone call of two or more mobile communication terminals with an identical ESN (electronic serial number) and mobile identification number information in a same base station.

### Discussion of the Related Art

A mobile communication terminal stores ESN (Electronic serial number) and MIN (mobile identification number) information in an internal memory thereof for easily identifying a terminal and selecting a corresponding terminal in a process of connecting an outgoing/incoming call in relation to a communication service.

The mobile communication system manages the ESN and MIN information assigned to each mobile communication terminal by registering the information in a database. In the process of connecting the outgoing/incoming call, the mobile communication system compares the ESN and MIN information of a target terminal with information registered in the database, and performs a call establishment if the information is identical.

The ESN and MIN information assigned to the mobile communication terminal may be used in another mobile communication terminal by duplicating the information in another mobile communication terminal. When the outgoing/incoming call is generated, there is a possibility that the outgoing/incoming call is established to a clone terminal with the same ESN and MIN information as that of a legitimate mobile communication terminal. However, in an event that the clone terminal with the same ESN and MIN information is in a different coverage, a clone call is not generated because the call is established only to a first connected terminal even though the call establishment time is the same.

If a second terminal tries to establish the call when the outgoing/incoming call is already established to a first terminal, the system is unable to acknowledge the call thereby clone call of two or more mobile terminals is unavailable.

However, when the two or more terminals with the same ESN and MIN information and existing in a same base station try the outgoing/incoming call at a same time, the outgoing/incoming call is undetected. In other words, a message from the two or more terminals with the same ESN and MIN information is received by the same base station at the same time, and the base station acknowledges as if there is one mobile communication terminal thereby a call is normally established.

Accordingly, the clone call is enabled two or more terminals communizing one traffic channel in the same base station. Therefore, there is a problem that a user of the clone terminal may eavesdrop communication of another user using a legitimate terminal.

There is a method of preventing the clone call by using an indigenous A-KEY value of a terminal for preventing source of the clone call of the clone terminal. However, a certifying center is needed for storing the A-KEY value unduplicatable to a database in the mobile communication system, and cost for maintaining the certifying center is expensive. Therefore, the method of preventing the clone call by using an indigenous A-KEY value of a terminal is unused .for economic efficiency
US 2001/044295 A1 discloses a mobile communication network comprising: subscriber terminals, a base station, a response request signal transmission unit and a judgment unit. The response request signal transmission unit transmits a response request to a subscriber terminal with a selected MIN and ESN. If a clone terminals exists besides the subscriber terminal, the judgment unit receives a plurality response signals disclosing the presence of the clone terminal.

### SUMMARY OF THE INVENTION

Accordingly, the present invention is directed to a method of preventing a clone call of a clone terminal that substantially obviates one or more problems due to limitations and disadvantages of the related art.

An object of the present invention is to provide a method of preventing eavesdropping by a clone call through a clone terminal.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.
The object is solved by the features of the independent claim.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates a flow diagram showing a first embodiment of a method of preventing clone call at a clone terminal in accordance with the present invention.

FIG. 2 illustrates a timing diagram showing a first embodiment of a method of preventing clone call at a clone terminal in accordance with the present invention.

FIG. 3 illustrates a flow diagram of a method of preventing clone call at a clone terminal useful for understanding the invention.

FIG. 4 illustrates a timing diagram of a method of preventing clone call at a clone terminal for better understanding the invention.

FIG. 5 illustrates a diagram of a status request message in FIG. 4.

FIG. 6 illustrates a diagram of a status reply message in FIG. 4.

FIG. 7 illustrates a flow diagram of a method of preventing clone call at a clone terminal useful for understanding the invention.

FIG. 8 illustrates a timing diagram of a method of preventing clone call at a clone terminal as in fig. 7.

FIG. 9a to FIG. 9b illustrate a diagram of a parameter search message and a reply message in FIG. 8.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

The present invention is a method of preventing a clone call by using two terminals with same ESN and MIN information. Accordingly, a following description is an example of a case that a normal terminal and a clone terminal existing in a same coverage try to communicate at a same time. A mobile communication system needs a program for performing a function of managing a call together with a function of detecting clone call.

A method of preventing clone call in accordance with the present invention is analyzing a signal message provided from the terminal existing in the same base station and determining an existence of the clone terminal. The signal message used for detecting the clone call is in a various forms. The method is divided into a case of using replay time difference in each terminal.

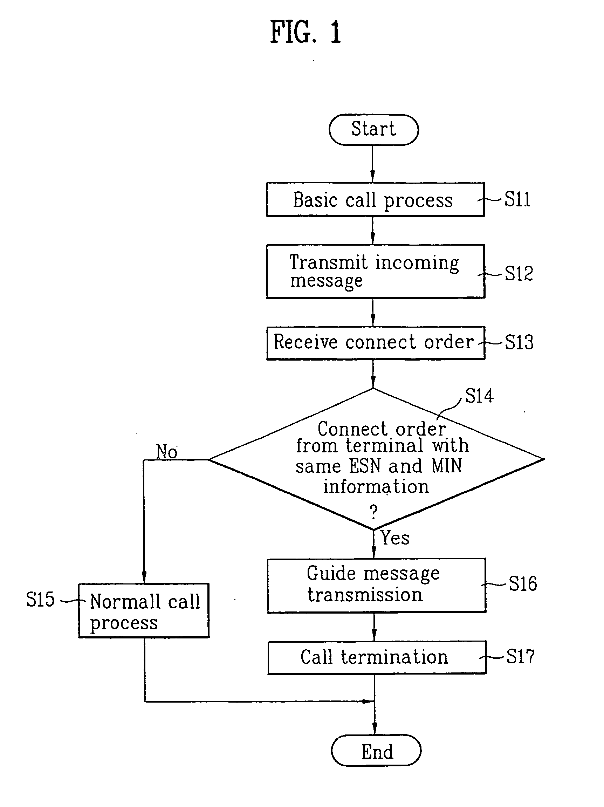

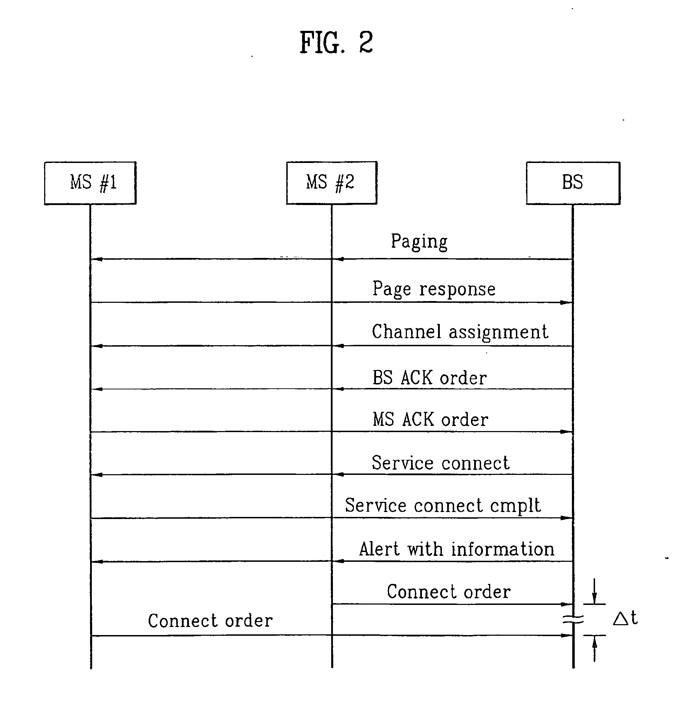

First, a preventing process of the clone terminal using time difference of connect order of the terminal is described with reference to FIG. 1 and FIG. 2. FIG. 1 illustrates a flow diagram showing a first embodiment of a method of preventing clone call at a clone terminal in accordance with the present invention. FIG. 2 illustrates a timing diagram showing a first embodiment of a method of preventing clone call at a clone terminal in accordance with the present invention.

The process of preventing the clone call of the clone terminal using the incoming response time difference is limited to the incoming call. If there exists the clone terminal with the same ESN and MIN information in one base station, the incoming call management process is almost same from generation of an incoming call to the connect order of the terminal user.

In other words, as illustrated in the timing diagram of FIG. 2, there is no time difference until paging terminals (MS1, MS2) via the BS (Base station) and performing a series of incoming call management process such as Page response, Channel assignment, BS ACK order, MS ACK order, Service order, Service connect complete such that the terminal remains in waiting (S11).

An alert with information is transmitted to a target terminal for the incoming call according to the incoming call management procedure (S12). A called subscriber performs a variety of forms of connect order. In this case, the connect order is transmitted from a called terminal to the base station (S13).

When the connect order is received from the called terminal, it is confirmed whether the connect order is received from a second terminal with ESN and MIN information same as the called terminal in a predetermined period of time (S 14).

In this case, if there is no connect order of the second terminal with the same ESN and MIN information in the predetermined period of time, a normal incoming call management process is performed. The incoming call is processed for communication between the calling subscriber and the called subscriber (S15).

When there are connect orders from the second terminal with the ESN and MIN information at different time intervals (Δ t) in the process of S14, it is acknowledged as the clone call by the clone terminal. Accordingly, the corresponding call is terminated (S17). Desirably, before the call preventing (S17), a notification message is transmitted for notifying existence of the clone terminal with the same ESN and MIN information to the call request caller (S16).

After the incoming message is transmitted from the base station to the called terminal, the connect order is transmitted to a corresponding base station at the time the called subscriber presses a speak button (or opens a flip). It is rare that the connect order from different terminals with the same ESN and MIN information is transmitted at the same time. Therefore, when the connect order is received from two or more terminals with the same ESN and MIN information in the predetermined period, it is as if there exists the clone terminal and therefore the corresponding incoming call is terminated.
The following is provided for better understanding the invention.

There is a method of using the specific information of the terminal for preventing the clone call of the clone terminal.
As abovementioned, the terminal specific information is divided into the fixed specific value and the floating specific value.

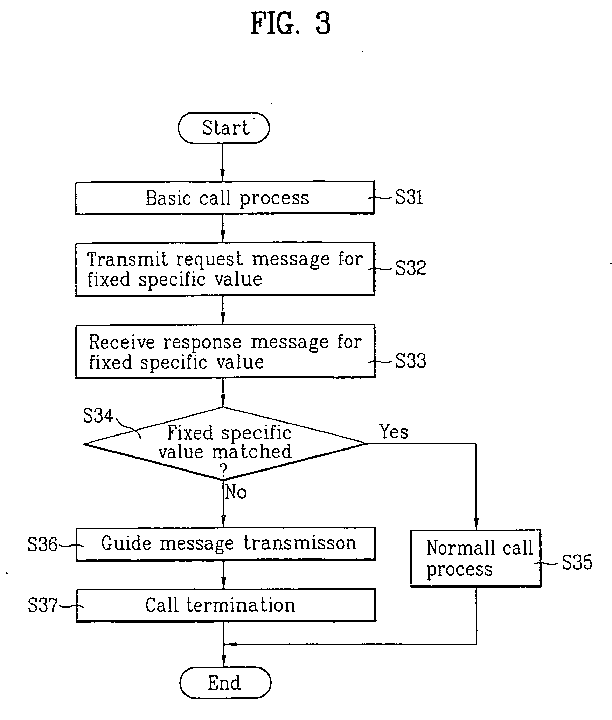

First, the method of preventing the clone call of the clone terminal by using the clone terminal is described referring to FIG. 3 to FIG. 6. The fixed specific information of the terminal means a specific hardware of the terminal (i.e., a kind of the terminal) and software version. The method of preventing the clone call considers a point that fixed characteristic information such as hardware and software version information of each terminal may be different from each other although the two or more terminals have the same ESN and MIN information. The clone call process of the fraud terminal using the fixed specific value of the terminal is applied to the outgoing/incoming call.

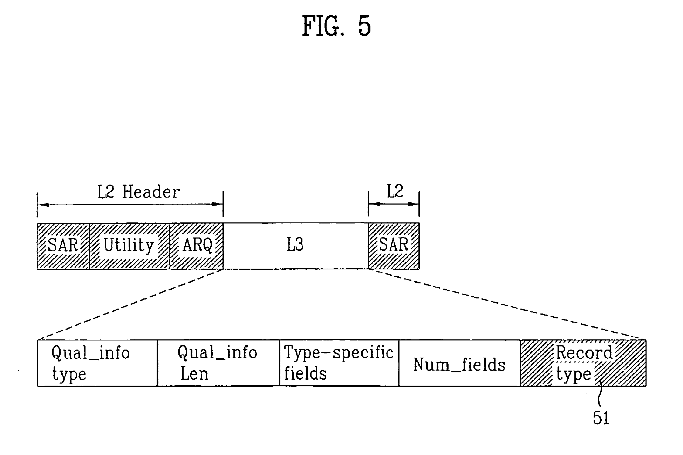

As illustrated in the flow diagram of FIG. 3, a basic call process according to the outgoing/incoming call generation is performed (S31), and a status request message for requesting the fixed specific value information is transmitted to the terminal by using the ESN and MIN information of the corresponding outgoing/incoming terminal (S32). Transmission process of a fixed specific value request message is performed a plurality of times. The fixed specific value request message is shown in a record type field 51 as a form of IS-2000 as illustrated in FIG. 5. A following table 1 is set values for requesting terminal information to the record type field.

**[Table 1]**

| Information record requested | Record type (binary) | Qual_info_type (binary) |
|---|---|---|
| Reserved for obsolete Identification | 00000110 | - |
| Call mode | 00000111 | 00000000 |
| Terminal information | 00001000 | 00000010 |
| Roaming information | 00001001 | 00000010 |
| Security status | 00001010 | 00000000 |
| IMSI | 00001100 | 00000000 |
| ESN | 00001101 | 00000000 |
| : | : | : |

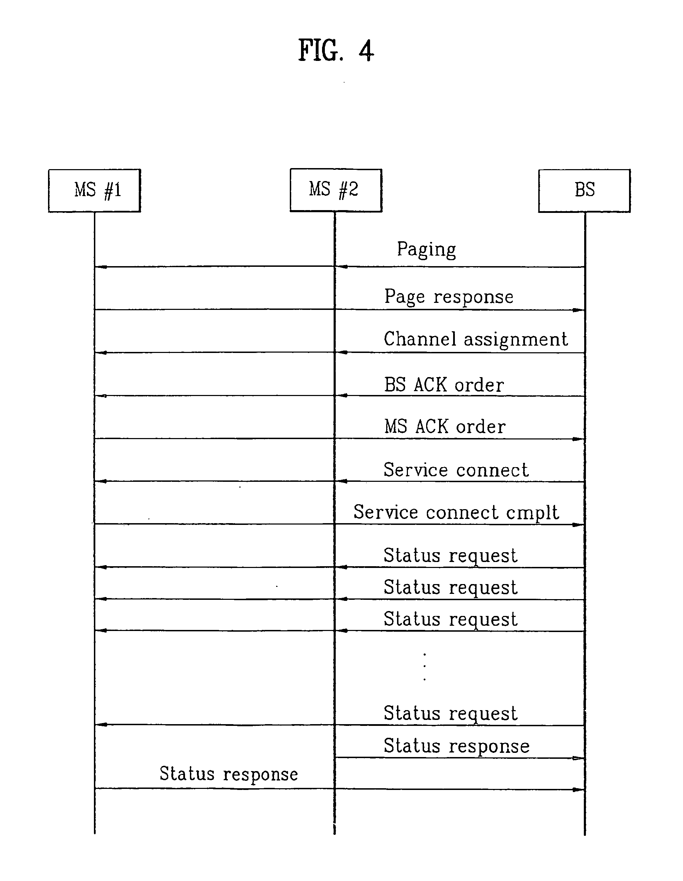

The outgoing/incoming target terminal (MS I, MS2) requested to transmit the fixed specific value information of the terminal reads the terminal information stored in the internal memory and transmits the status response message including the fixed specific value to the base station (S33). While or after the status request message is transmitted a plurality of times, the status response message is transmitted. In other words, at the same time the request message is transmitted, the response message from the predetermined terminal is transmitted to the base station. The timing diagram of FIG. 4 is for helping to understand the transmission process. The status response message is not transmitted only after the transmission of the request message is completed, the transmission of the request message being performed the plurality of times.

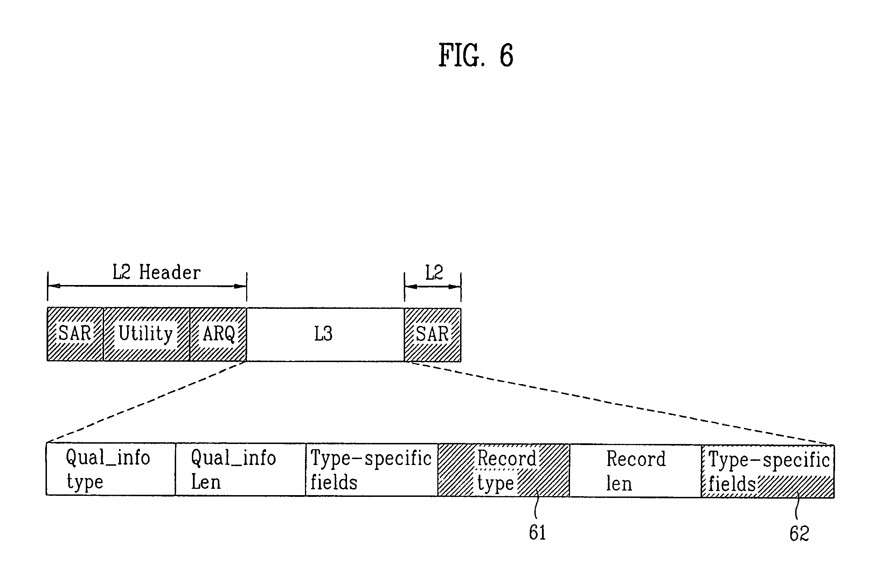

The status message indicates the record type 61 as illustrated in FIG. 6, and a type specific field 61 includes a manufacturer code (MOB_MFG_Code), a model number (MOB_model) and currently used software version (MOB_FIRM_REV) as illustrated in table 2.

**[Table 2]**

| Type Specific Field | Length(bits) |
|---|---|
| MOB_P_REV | 8 |
| MOB_MFG_Code | 8 |
| MOB_Model | 8 |
| MOB_FIRM_REV | 16 |
| SCM | 8 |
| Local_CTRL | 1 |
| Slot_cycle_index | 3 |
| : | : |

In this case, transmission (response) process of the request message and the status message of the fixed specific value information of the terminal is performed the plurality of times for receiving at least one response at a minimum from an individual terminal with reference to a case that there are two or more clone terminals.

Whether the clone call is placed from the clone terminal is determined by analyzing the fixed specific value received from the terminal. There are two methods for determining whether the clone call is placed from the clone terminal by analyzing the fixed specific value. A first method is comparing the received fixed specific value with the fixed specific value stored in the database in the system. Not only the clone call but also a single call made by the clone terminal is prevented by comparing whether the terminal specific value information stored in the database is the same as the received terminal specific value information.

A second method is confirming whether the clone call is tried from the clone terminal with the same ESN and MIN information by comparing whether the received specific values are the same each other (S34).

If the received terminal specific values are the same each other, it is confirmed that the clone terminal with the same ESN and MIN information does not exist. In this case, the normal outgoing/incoming call management is performed so as to process communication between the calling subscribers (S35).

However, if the received terminal specific values are not the same each other, it is judged that the outgoing/incoming call is tried from the clone terminal. A guide message about preventing the clone call of the clone terminal is transmitted to all call-established terminals (S36) and corresponding outgoing/incoming call is terminated (S37).

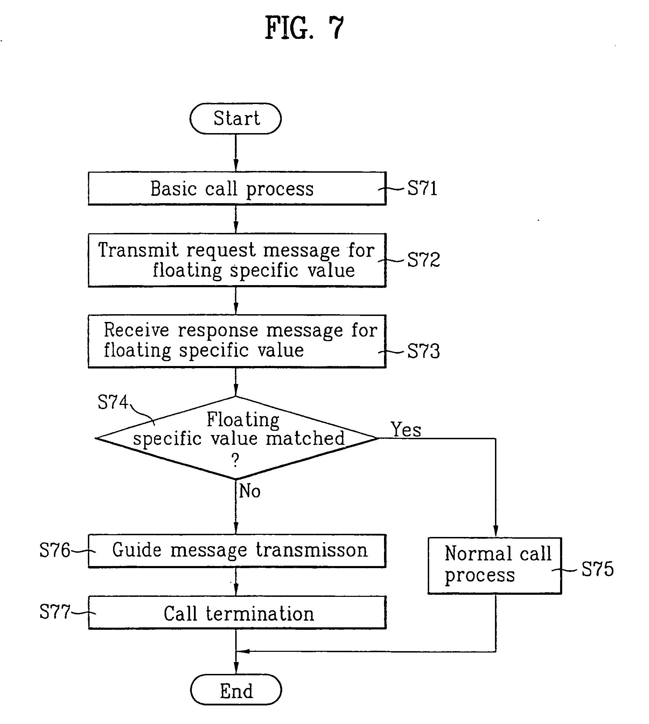

The method of preventing the clone call of the clone terminal by using the terminal specific value and the floating specific value is described referring to FIG. 7 to FIG.9b. The method is for preventing the clone call of the two or more clone terminals with the same fixed specific value, that is, the same ESN and MIN information, and same hardware and software version. The floating information according to the terminal operation means reception frequency information of an overhead message (a configuration parameter and an access parameter message) having system information transmitted for establishing the call from time the terminal searches the base station after the power of the terminal is on to the time the terminal is changed into a waiting mode.

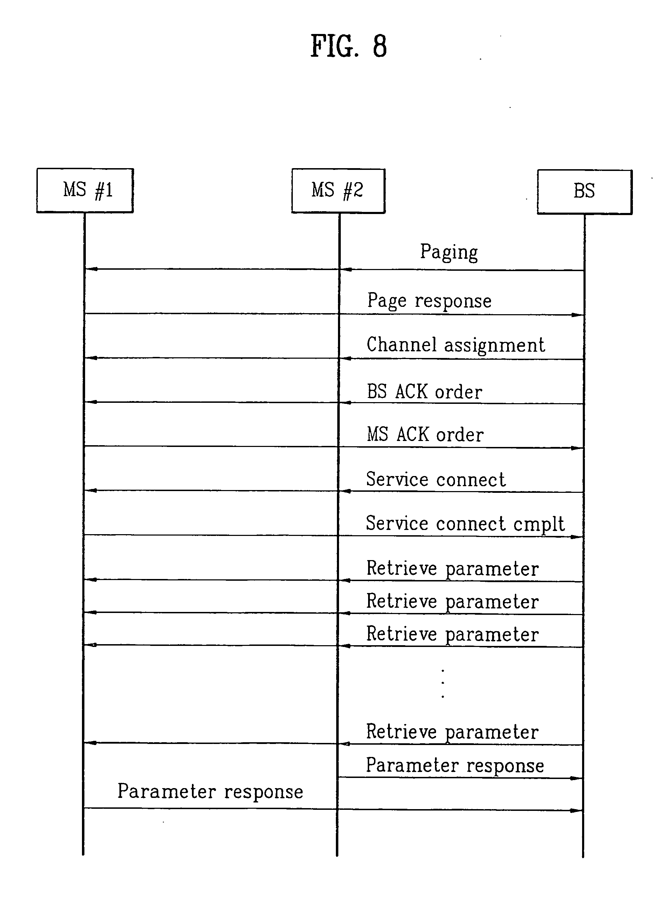

FIG. 7 illustrates a flow diagram of a method of preventing clone call at a clone terminal FIG. 8 illustrates a further timing diagram of a method of preventing clone call at a clone terminal. FIG. 8 illustrates an example of incoming call management.

First, the basic call management process (Paging, Page response, Channel assignment, BS ACK order, MS ACK order, Service connect, Service connect complete) is performed (S71). A retrieve parameter message for requesting the operation change information by using the ESN and MIN information of the incoming/outgoing target terminal is repeatedly transmitted. Reason why the information request message is repeatedly transmitted is the same as that of the status request message transmission. In other words, it is for receiving at least one response from at least one individual terminal with regard to the case there exist two or more clone terminals.

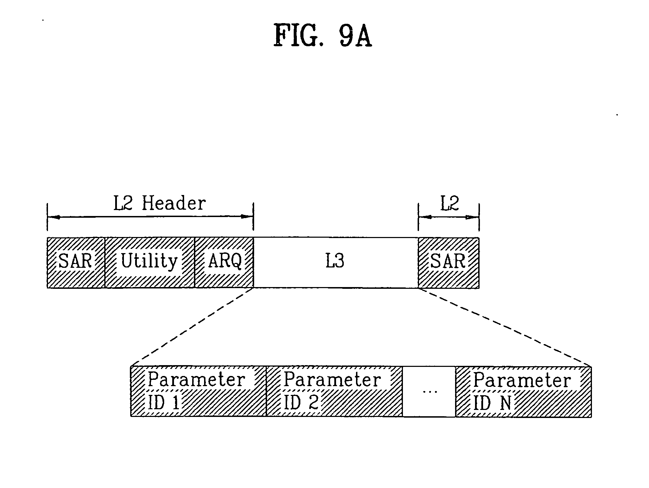

FIG. 9a illustrates a diagram of a retrieve parameter message defined in IS-2000. To the parameter search message including traffic that is a signal of an upper layer (L3), a parameter ID value about paging and access channel related to the operation change information of the terminal is set and transmitted so as to request the operation change information to the corresponding outgoing/incoming target terminal.

Then, the outgoing/incoming target terminal being requested for the operation change information retrieves the operation change information such as the paging and the access channel related parameter information and repeatedly transmits the information to the base station, the operation change information stored and managed in a separate memory. The parameter response message is transmitted while or after the retrieve parameter message is transmitted a plurality of times. In other words, at the same time the request message is transmitted from a predetermined terminal, the response message is transmitted to the base station. The timing diagram of FIG. 8 is to help understanding the process and the transmission of the request message is carried out after the transmission of the request message is completely carried out the plurality of times.

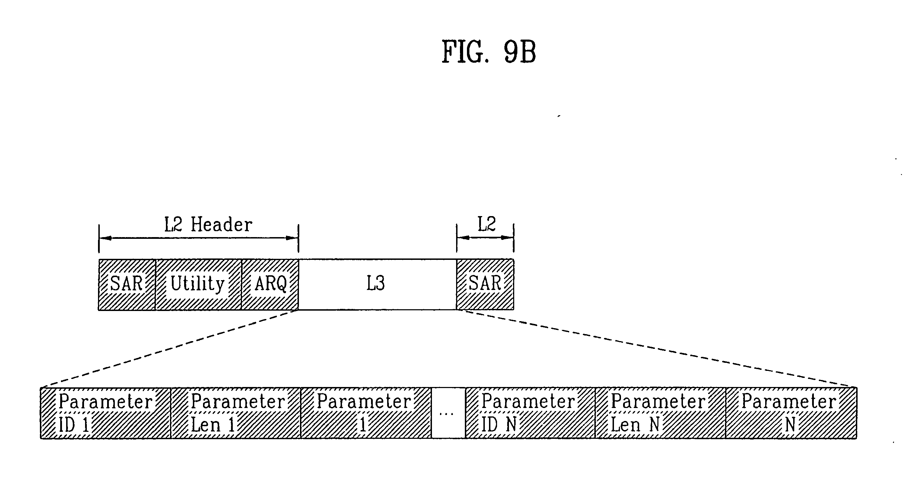

By using the parameter response message defined in IS-2000 illustrated in FIG. 9B, the operation change information of the terminal is transmitted. As illustrated in following table 3, the operation change information such as paging and access channel information (PAG_#, ACC_#; #=1, 2, ..., N) and the system time information (OTHER_SYS_TIME) retrieved from the internal memory is set into the parameter ID and the parameter information field of the parameter response message and transmitted.

**[Table 3]**

| Parameter Identifier | Value of Parameter_ID (decimal) | Length (bits) | Support Required | Settable Parameter | Reference Section |
|---|---|---|---|---|---|
| : | : | : | : | : | : |
| PAG_1 | 29 | 24 | Y | Y | [4] |
| PAG_2 | 30 | 24 | Y | Y | [4] |
| PAG_3 | 31 | 16 | Y | Y | [4] |
| PAG_4 | 32 | 24 | Y | Y | [4] |
| PAG_5 | 33 | 24 | Y | Y | [4] |
| PAG_6 | 34 | 16 | Y | Y | 2.4 |
| PAG_7 | 35 | 16 | Y | Y | 2.4 |
| ACC_1 | 36 | 16 | Y | Y | [4] |
| ACC_2 | 37 | 16 | Y | Y | [4] |
| ACC_3 | 38 | 16 | Y | Y | [4] |
| ACC_4 | 39 | 16 | Y | Y | [4] |
| ACK_5 | 40 | 16 | Y | Y | [4] |
| ACC_6 | 41 | 16 | Y | Y | [4] |
| ACC_7 | 42 | 16 | Y | Y | [4] |
| ACC_8 | 43 | 16 | Y | Y | [4] |
| : | : | : | : | : | : |
| Other_sys_time | 49 | 3 | Y | N | 2.4 |

The paging and access channel information (PAG_N, ACC_N) is compared with system time information. The paging and access channel information indicating total reception frequency of each kind of overhead message among the operation change information included in the parameter response message repeatedly received from the terminal with the same ESN and MIN information (S74).

When the information is the same, the normal call management process is performed (S75). When different information exists, it is assumed to be the clone call of the clone terminal, and the corresponding outgoing/incoming call is terminated (S77). A guide message transmission process is preceded (S76).

The embodiment according to the present invention is not limited to the abovementioned description, and it will be apparent to those skilled in the art that various modifications and variations can be made in the present invention without departing from the scope of the invention. For example, as aforementioned, the method of detecting and preventing the clone call by using the call response difference and the method of preventing the clone call by using each terminal management information are realized individually, or each of the methods is carried out at a same time or in order.

Each of method of preventing the clone call is activated/deactivated by a system operator or a terminal user. As aforementioned, the present invention detects the clone call attempted by two or more terminals with the same ESN and MIN information by using the incoming response time difference of the terminals processing the incoming call within one base station of the mobile communication so as to block the clone call of the clone terminal in the same base station.

The present invention detects the attempt of the clone call by two or more communication with the same ESN and MIN information by using the fixed characteristic information managed by each terminal processing the outgoing/incoming call in one base station of the mobile communication system or the floating information according to the terminal operation so as to block the clone call of the clone terminal in the same base station.

It will be apparent to those skilled in the art that various modifications and variations can be made in the present invention. Thus, it is intended that the present invention covers the modifications and variations of this invention provided they come within the scope of the appended claims.

## Claims

1. Method of preventing clone call of a clone terminal existing in the same coverage of a base station as a normal terminal by using a signaling message received from a plurality of terminals with a same Mobile identification number, hereinafter called MIN, and an Electronic serial number, hereinafter called ESN, wherein the method is **characterized by** the steps:
acknowledging the clone terminal by detecting a time difference of a plurality of incoming connect orders (S13) provided from the plurality of terminals at different times: wherein a connect order is generated by a subscriber of a terminal when accepting a call; and
preventing (S17) a corresponding call.

2. Method according to claim 1, **characterized in that** the method further comprises a step of:
transmitting an alert with information (S12) to a target terminal, and wherein the acknowledging step (S13, S14) includes:
receiving a plurality of connect orders (S13) provided from the plurality of terminals at different times, and
determining (S14) whether the plurality of connect orders provided from the plurality of terminals with the same MIN and ESN information in a predetermined period of time are received at different times.

3. Method according to claim 1 or 2, **characterized in that** the method further comprises a step of:
transmitting a guide message (S16) notifying existence of the clone terminal with the same ESN and MIN information to a call request terminal before call preventing.

## Patentansprüche

1. Verfahren zum Verhindern eines Klon-Anrufs eines Klon-Endgeräts, das im selben Abdeckungsbereich einer Basisstation wie ein normales Endgerät vorhanden ist, unter Verwendung einer Signalgebungsnachricht, die von mehreren Endgeräten mit derselben Mobilidentifizierungsnummer, die im Folgenden MIN genannt wird, und einer elektronischen Seriennummer, die im Folgenden ESN genannt wird, empfangen wird, wobei das Verfahren **gekennzeichnet ist durch** die folgenden Schritte:
Bestätigen des Klon-Endgeräts **durch** Erfassen einer Zeitdifferenz mehrerer ankommender Verbindungsbefehle (S 13), die von den mehreren Endgeräten zu unterschiedlichen Zeiten bereitgestellt werden; wobei ein Verbindungsbefehl von einem Teilnehmer eines Endgeräts erzeugt wird, wenn er einen Anruf annimmt; und
Verhindern (S17) eines entsprechenden Anrufs.

2. Verfahren nach Anspruch 1, **dadurch gekennzeichnet, dass** das Verfahren ferner den folgenden Schritt umfasst:
Senden einer Warnung mit Informationen (S 12) zu einem Zielendgerät, wobei der Bestätigungsschritt (S13, S14) umfasst:
Empfangen mehrerer Verbindungsbefehle (S 13), die von den mehreren Endgeräten zu unterschiedlichen Zeiten bereitgestellt werden, und
Bestimmen (S 14), ob die mehreren Verbindungsbefehle, die von den mehreren Endgeräten mit denselben MIN- und ESN-Informationen in einer vorgegebenen Zeitperiode bereitgestellt werden, zu unterschiedlichen Zeiten empfangen werden.

3. Verfahren nach Anspruch 1 oder 2, **dadurch gekennzeichnet, dass** das Verfahren ferner den folgenden Schritt umfasst:
Senden einer Führungsnachricht (S16), die das Vorhandensein des Klon-Endgeräts mit denselben ESN- und MIN-Informationen meldet, zu einem einem Anruf anfordernden Endgerät, bevor der Anruf verhindert wird.

## Revendications

1. Procédé pour empêcher un appel cloné depuis un terminal cloné présent dans la même zone de couverture d'une station de base qu'un terminal normal en utilisant un message de signalisation reçu depuis une pluralité de terminaux avec un même numéro d'identification mobile, dénommé ci-après MIN, et un numéro de série électronique, dénommé ci-après ESN, ledit procédé étant **caractérisé par** les étapes consistant à :
reconnaître le terminal cloné en détectant une différence temporelle d'une pluralité d'ordres de connexion incidents (S13) fournis depuis la pluralité de terminaux à des instants différents, dans lequel un ordre de connexion est généré par un souscripteur d'un terminal quand il accepte un appel ; et
empêcher (S 17) un appel correspondant.

2. Procédé selon la revendication 1, **caractérisé en ce que** le procédé comprend en outre une étape consistant à :
transmettre une alerte avec des informations (S12) vers un terminal cible, et dans lequel l'étape de reconnaissance (S 13, S 14) inclut :
de recevoir une pluralité d'ordres de connexion (S13) fournis depuis la pluralité de terminaux à des instants différents, et
de déterminer (S14) si la pluralité d'ordres de connexion fournis depuis la pluralité de terminaux avec les mêmes informations MIN et ESN dans une période temporelle prédéterminée sont reçus à des instants différents.

3. Procédé selon la revendication 1 ou 2, **caractérisé en ce que** le procédé comprend en outre une étape consistant à :
transmettre un message guide (S 16) notifiant l'existence du terminal cloné avec les mêmes informations ESN et MIN à un terminal demandant un appel avant d'empêcher l'appel.
